# FASCICULE DE BREVET EUROPEEN

(11) **EP 0 686 822 B1**
(45) Date de publication et mention de la délivrance du brevet: **08.09.1999**
(21) Numéro de dépôt: 95108414.4
(22) Date de dépôt: 01.06.1995
(51) Int. Cl.: F28D 1/053, B60K 11/02

(54) **Echangeur de chaleur d'un système de refroidissement pour véhicule automobile**
Wärmetauscher für den Kühlungskreislauf eines Kraftfahrzeugs
Heat exchanger for the cooling circuit for an automotive vehicle

(30) Priorité: 06.06.1994 FR 9406897
(43) Date de publication de la demande: 13.12.1995
(73) Titulaire: The Swatch Group Management Services AG, 2501 Biel (CH)
(72) Inventeur: Thuliez, Jean-Luc, CH-2520 La Neuveville (CH); Chevroulet, Tristan, Norwich NR3 4BH (GB); Stoll, Daniel, CH-2000 Neuchâtel (CH)
(74) Mandataire: Patry, Didier Marcel Pierre

(56) Documents cités:
- DE-A- 4 128 113
- FR-A- 666 204
- FR-A- 702 989
- FR-A- 786 832
- GB-A- N2 031
- GB-A- 2 261 280
- PATENT ABSTRACTS OF JAPAN vol. 18 no. 177 (M-1582) ,25 Mars 1994 & JP-A-05 338573 (SUZUKI MOTOR CORP.) 21 Décembre 1993,
- PATENT ABSTRACTS OF JAPAN vol. 16 no. 585 (M-1347) ,25 Décembre 1992 & JP-A-04 231269 (FURUKAWA ALUM.CO.LTD.) 20 Août 1992,

## Description

La présente invention concerne un véhicule automobile comportant un châssis et un système de refroidissement à liquide pourvu d'un échangeur de chaleur réalisé sous la forme d'un volume cylindrique creux ayant une entrée et une sortie qui sont connectées à un circuit de liquide du système de refroidissement.

Les systèmes de refroidissement du type à eau comportent classiquement un échangeur de chaleur, ou radiateur, dans lequel circule l'eau qui a été échauffée au contact du moteur. Le radiateur est conçu de manière à présenter une surface maximale de contact avec l'air et il est, le plus souvent, disposé perpendiculairement par rapport au chemin d'écoulement de l'air, soit à l'avant, soit à l'arrière du véhicule. De forme généralement rectangulaire, ces radiateurs classiques constituent une résistance, à l'écoulement de l'air autour du véhicule en mouvement, qui influence négativement le coefficient de traînée (ou Cx) et, par suite, les performances de celui-ci. Pour les véhicules automobiles à moteur électrique, il est particulièrement important de réduire au maximum toutes les pertes d'énergie car celles-ci limitent considérablement l'autonomie maximale des véhicules. L'obtention d'un Cx très petit est une nécessité pour les véhicules mus par un moteur électrique et destinés à pouvoir atteindre des vitesses de l'ordre de 100 km par heure. Il est, de plus, hautement souhaitable que le poids des batteries, qui emmagasinent l'énergie de base, puisse être maintenu à une valeur aussi faible que possible. Les batteries, en effet, interviennent pour une part non négligeable dans le poids total des véhicules à commande électrique.

La publication JP-A-04 231269 montre un châssis de véhicule automobile comportant deux volumes cylindriques creux qui servent d'échangeurs de chaleur et dont les entrées et les sorties sont connectées à un circuit de liquide d'un système de refroidissement. Cela signifie que le liquide doit entrer dans certains éléments du châssis et en ressortir en passant par des raccords étanches appropriés. En outre, ces éléments ont une configuration spéciale, avec des ailettes extérieures.

La publication EP-A-0 653 344, qui est un document selon l'article 54(3) CBE, décrit un châssis de véhicule avec lequel la présente invention est utilisable, comme on l'expliquera plus loin.

Un but de la présente invention est de fournir un échangeur de chaleur pour véhicule automobile offrant une résistance à l'écoulement de l'air moindre que dans les systèmes de refroidissement de l'art antérieur.

Un autre but est de fournir un échangeur de chaleur bon marché pour véhicule automobile.

Un autre but est de fournir un échangeur de chaleur pour véhicule automobile facile à installer.

Ces buts sont atteints grâce aux caractéristiques énoncées dans les revendications.

Le fait d'utiliser un échangeur de chaleur ayant les caractéristiques mentionnées permet d'améliorer le coefficient de pénétration du véhicule dans l'air en diminuant la surface apparente de cet échangeur dans la direction du mouvement. De plus, le corps d'échangeur peut être aisément monté sur un organe tubulaire du châssis, ce qui augmente considérablement l'efficacité de l'échange de chaleur entre le circuit de refroidissement et l'air environnant.

D'autres objets, caractéristiques et avantages de la présente invention apparaîtront plus clairement à la lecture de la description suivante d'exemples de réalisation particuliers; ladite description étant faite à titre non limitatif et en relation avec les dessins joints, dans lesquels:
- la figure 1 représente, schématiquement, un premier exemple d'échangeur de chaleur selon l'invention disposé sur un organe cylindrique creux relié au châssis d'un véhicule automobile;
- la figure 2 montre, en coupe, l'échangeur de chaleur de la figure 1;
- la figure 3 montre, en perspective, un autre exemple de réalisation d'échangeur de chaleur selon l'invention;
- la figure 4 montre, en coupe, une première variante des moyens de montage de l'échangeur de chaleur de la figure 3;
- les figures 5a et 5b montrent, en coupe, une deuxième variante des moyens de montage de l'échangeur de chaleur de la figure 3; et
- la figure 6 est un schéma général du système de refroidissement.

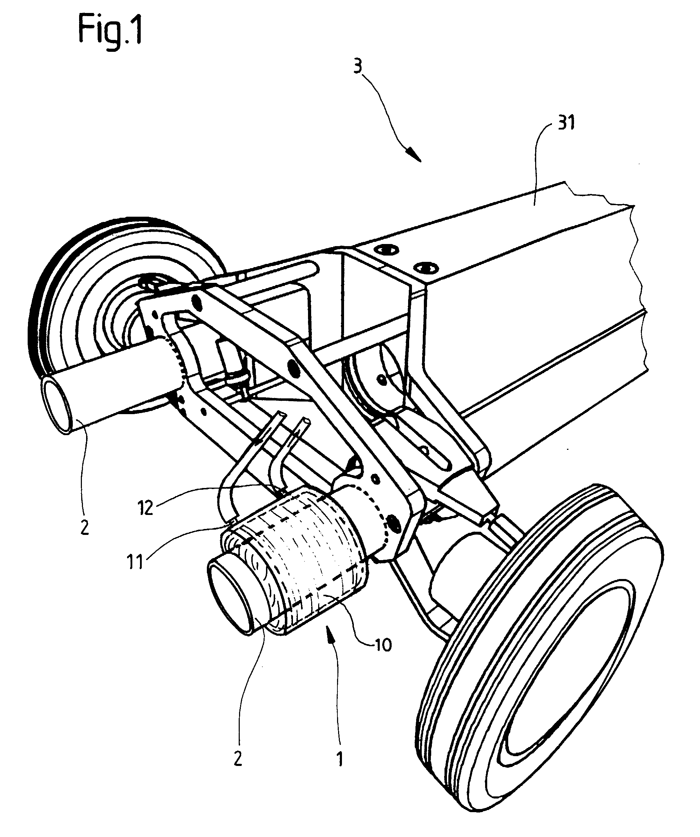

La figure 1 montre un exemple d'application particulièrement avantageuse de la présente invention. Il y est représenté une partie de châssis qui a fait l'objet de la demande de brevet EP 0 653 344 A publiée après la date de priorité de la présente demande. Ce châssis 3 comporte une poutre centrale rigide 31 auquel sont fixés des organes tubulaires allongés 2. La fonction principale de ces organes tubulaires est de constituer des zones d'absorption d'énergie par déformation en cas de choc frontal du véhicule contre un obstacle. Etant creux et disposés longitudinalement par rapport au véhicule, il y circule naturellement, lorsque le véhicule est en mouvement, de l'air provenant de l'extérieur. Aussi est-il proposé, selon la présente variante, de tirer parti de cette disposition en disposant un corps en forme de manchon 10 de l'échangeur de chaleur 1 sur une ou plusieurs extrémités desdits organes tubulaires 2. De cette manière, on bénéficie de l'écoulement de l'air dans l'organe tubulaire 2 et à la surface extérieure de celui-ci pour dissiper la chaleur transportée par le liquide de refroidissement circulant depuis l'entrée 11 jusqu'à la sortie 12 de l'échangeur de chaleur 1. Si les organes tubulaires 2 sont réalisés en un matériau très bon conducteur de la chaleur comme, par exemple, l'aluminium ou des alliages d'aluminium, l'échange de chaleur est d'autant meilleur et la surface de contact entre l'échangeur 1 et l'organe tubulaire 2 peut être réduite au minimum.

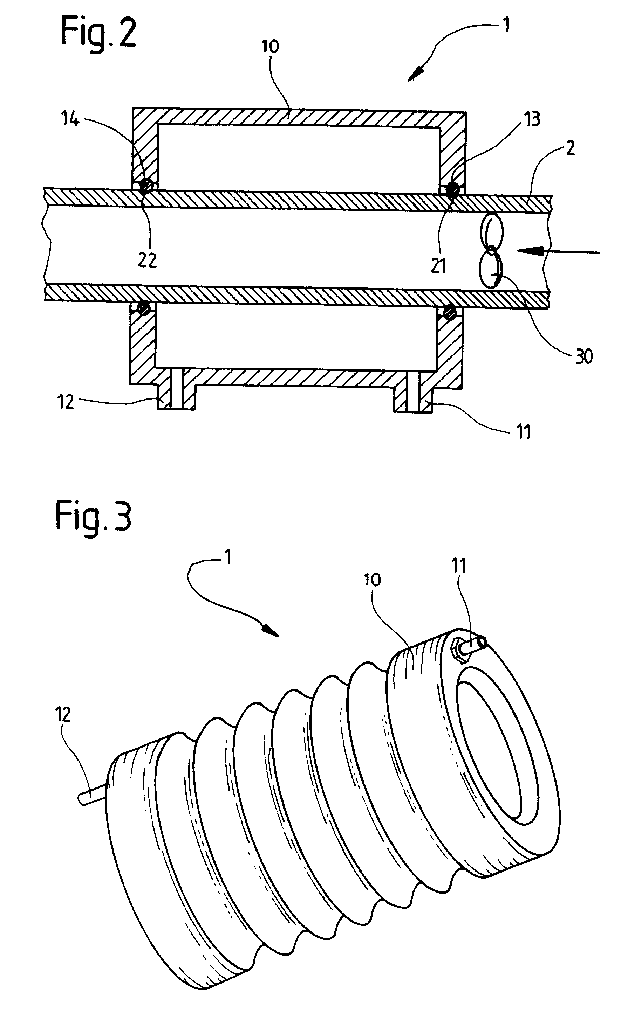

La figure 2 représente, en coupe, un premier mode de réalisation de l'échangeur de chaleur monté comme indiqué à la figure 1. Comme illustré sur la figure 2, l'échangeur 1 n'est pas constitué par un volume fermé, mais utilise la surface externe de l'organe tubulaire 2 pour paroi interne. Le contact direct du liquide de refroidissement avec la surface de l'organe tubulaire augmente l'efficacité de l'échange de chaleur. L'étanchéité du circuit de refroidissement entre le corps 10 et l'organe tubulaire 2 est assurée par les joints toriques 13 et 14. Des encoches annulaires 21 et 22 peuvent être réalisées sur la face externe des organes tubulaires 2 pour assurer un maintien en position du corps 10. Afin de permettre un bon écoulement de la chaleur, même lorsque le véhicule est arrêté ou à faible vitesse, on peut prévoir un ventilateur 30 destiné à augmenter la circulation d'air dans l'organe tubulaire 2. Ce ventilateur peut, par exemple, être classiquement commandé par un thermostat (non représenté) disposé dans le circuit de refroidissement ou dans le bloc moteur du véhicule.

La figure 3 représente, vu en perspective, un échangeur de chaleur selon les principes de l'invention. Dans les figures précédentes, l'échangeur de chaleur était représenté avec des surfaces externes planes par souci de simplification et aussi, dans le but de montrer que la surface d'échange de chaleur privilégiée est celle en contact avec l'organe tubulaire 2. En fait, toutes les faces de l'échangeur participent à cet échange de chaleur et, pour augmenter les surfaces d'échange, il sera avantageux de conformer l'échangeur de manière que ses surfaces externes présentent un profil ondulé, tel que représenté. Un tel échangeur peut, aisément et à bon marché, être réalisé en tôle préformée par roulage ou pressage et soudage. Les embouts d'entrée 11 et de sortie 12 peuvent, également, être soudées sur le corps principal de l'échangeur de chaleur 1.

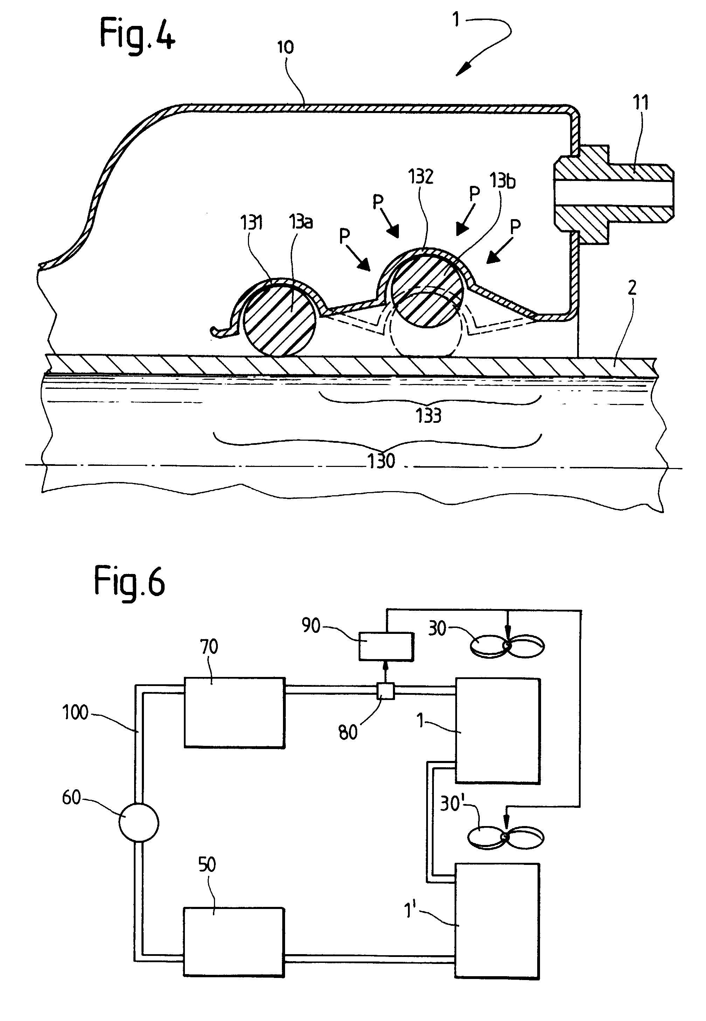

La figure 4 montre, en coupe, une variante de réalisation des moyens de montage de l'échangeur de chaleur de la figure 3. Selon cette variante, le bord intérieur 130 du corps 10, destiné à venir en contact avec l'organe tubulaire 2, est conformé de manière à présenter deux bosselages en creux et annulaires 131 et 132. Ces deux bosselages sont prévus pour recevoir deux joints toriques 13a et 13b qui assureront l'étanchéité de l'échangeur 1. De plus, la partie 133 du bord intérieur 130 est prévue de manière à pouvoir être déformée sous l'action d'une pression P; ladite déformation ayant pour effet d'appliquer le joint 13b contre la surface externe de l'organe tubulaire 2. Cette partie 133 est représentée, à la figure 4, en traits pleins dans sa forme et sa position initiales et en traits pointillés dans sa forme et sa position finales. Le montage d'un tel échangeur comprend, dès lors, les étapes suivantes. L'échangeur est, en un premier temps, positionné sur l'organe tubulaire 2, l'étanchéité étant, alors, partiellement assurée par les joints 13a. Ensuite, une pression P est engendrée à l'intérieur de l'échangeur, par remplissage de ce dernier à l'aide d'un gaz ou d'un liquide, pour déformer les parties 133 de manière à appliquer les joints 13b contre la surface externe de l'organe tubulaire 2.

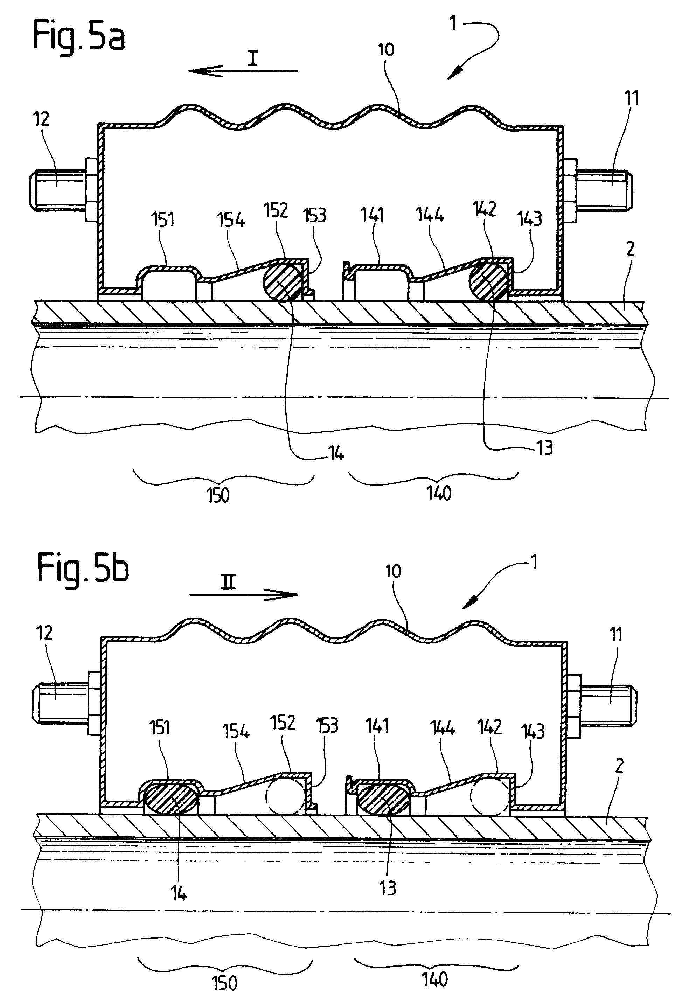

La figure 5 montre, en coupe partielle, une autre variante d'échangeur de chaleur selon l'invention pourvu de moyens de montage n'impliquant qu'un seul joint torique par côté de l'échangeur. Selon cette variante, les bords intérieurs 140 et 150 sont conformés de manière à présenter un premier bosselage en creux et annulaire 141, respectivement 151, et un deuxième bosselage en creux et annulaire 142, respectivement 152. Lesdits deuxièmes bosselages présentent une partie inclinée 144, respectivement 154, et des moyens d'arrêt 143, respectivement 153. Le montage de cet échangeur est effectué de la manière suivante. Le corps 10 de l'échangeur de chaleur 1 est, dans une première phase, positionné sur l'organe tubulaire 2 dans le sens de la flèche I (figure 5a); les joints toriques 13 et 14 ayant, au préalable, été placés dans lesdits deuxièmes bosselages 142 et 152. Lors de cette première phase, les joints toriques sont empêchés de sortir desdits deuxièmes bosselages par les moyens d'arrêt 143 et 153. Ensuite, dans une deuxième phase, un mouvement arrière de l'échangeur (dans le sens de la flèche II ) est effectué, entraînant le déplacement relatif des joints toriques 13 et 14 vers lesdits premiers bosselages 141 et 151. Les parties inclinées 144 et 154 facilitent le mouvement des joints vers leur position définitive illustrée à la figure 5b.

Dans les exemples d'application décrits précédemment, on a considéré qu'il existait déjà au moins un élément tubulaire sur lequel ledit échangeur de chaleur pouvait être monté. Il est évident que dans un tel cas, la solution de l'invention est particulièrement avantageuse puisque non seulement, les éléments tubulaires permettent un montage aisé desdits échangeurs de chaleur, mais leur connexion au châssis du véhicule a pour effet d'augmenter la capacité d'échange de chaleur. De plus, les coûts de réalisation et de montage de tels échangeurs sont particulièrement faibles. Les échangeurs de chaleur devront alors être disposés de manière telle qu'un écoulement d'air suffisant soit produit sur ses surfaces d'échange; à savoir les surfaces internes et externes. De par sa forme et pour autant qu'il soit disposé de manière à ce que son axe soit sensiblement parallèle à la direction d'écoulement de l'air, la résistance à l'air offerte par l'échangeur sera minimum et le coefficient de traînée (Cx) sera faiblement affecté. Il va de soi que, pour une capacité d'échange de chaleur donnée, la surface totale de l'échangeur qui n'est pas monté sur un élément de châssis devra être sensiblement plus grande que celle de l'échangeur monté sur un organe tubulaire.

La figure 6 montre, schématiquement, un système de refroidissement complet pour un véhicule automobile comportant, par exemple, un moteur thermique et un moteur électrique.

Ce système comprend un circuit de liquide (généralement de l'eau avec des additifs, tel de l'antigel) de refroidissement 100, qui circule dans le bloc du moteur électrique 70, traverse un premier 1 puis un deuxième 1' échangeurs thermiques, refroidit des éléments de puissance d'un moteur électrique 50 et traverse une pompe de circulation 60. Disposé dans le circuit de refroidissement, est encore prévu un capteur de température 80 dont la sortie est utilisée par un circuit de commande 90 pour actionner la mise en marche des ventilateurs 30 et 30' lorsque cette température devient excessive. Le schéma de la figure 6 ne représente qu'un exemple parmi beaucoup d'autres de système de refroidissement à eau pouvant être utilisé dans les véhicules automobiles. On peut encore signaler que d'autres éléments peuvent avoir besoin d'être refroidis comme, par exemple, les organes des mécanismes de freinage.

## Revendications

1. Véhicule automobile comportant un châssis et un système de refroidissement à liquide pourvu d'un échangeur de chaleur (1) réalisé sous la forme d'un volume cylindrique creux ayant une entrée (11) et une sortie (12) qui sont connectées à un circuit de liquide du système de refroidissement, caractérisé en ce que le volume cylindrique creux de l'échangeur est défini entre un organe tubulaire creux (2) du châssis, dont la surface externe constitue également la surface intérieure de l'échangeur et dans lequel de l'air peut circuler, et un corps d'échangeur (10) en forme de manchon qui entoure l'organe tubulaire creux (2) et est monté hermétiquement sur celui-ci, l'organe tubulaire creux (2) étant fait d'un matériau thermiquement conducteur.

2. Véhicule automobile selon la revendication 1, caractérisé en ce que l'organe tubulaire creux (2) est en un matériau à base d'aluminium.

3. Véhicule automobile selon la revendication 1, caractérisé en ce que le corps d'échangeur (10) comporte deux bords intérieurs (130) conformés de manière à présenter chacun deux bosselages annulaires creux (131,132) destinés à recevoir deux joints toriques (13a, 13b) assurant l'étanchéité entre le corps d'échangeur (10) et l'organe tubulaire (2).

4. Véhicule automobile selon la revendication 3, caractérisé en ce que l'un (132) des deux bosselages annulaires creux (131,132) est réalisé dans une partie déformable (133) sous l'effet d'une pression, permettant, après le positionnement du corps d'échangeur (10) sur l'organe tubulaire (2), d'effectuer la compression du joint torique correspondant (13b) sur la surface externe de l'organe tubulaire (2).

5. Véhicule automobile selon la revendication 1, caractérisé en ce que le corps d'échangeur (10) comporte deux bords intérieurs (140,150) conformés de manière à présenter chacun deux bosselages annulaires creux (141,142,151,152), l'un (142,152) des deux bosselages étant destiné à recevoir un joint torique (13,14) dans une première position de mise en place et le deuxième (141,151) des bosselages étant destiné à recevoir le joint torique (13,14) dans une deuxième position qui assure l'étanchéité de l'échangeur (1).

6. Véhicule automobile selon l'une des revendications précédentes, caractérisé en ce que l'organe tubulaire (2) est disposé longitudinalement par rapport au véhicule.

7. Véhicule automobile selon l'une des revendications précédentes, caractérisé en ce que l'échangeur (1) est monté dans le véhicule de manière que son axe longitudinal soit sensiblement parallèle à la direction d'écoulement d'air dans le véhicule.

8. Véhicule automobile selon l'une des revendications précédentes, caractérisé en ce que le corps d'échangeur (10) est réalisé en tôle et présente un profil ondulé sur sa surface cylindrique extérieure.

## Patentansprüche

1. Kraftfahrzeug, das ein Chassis und ein Flüssigkeitskühlsystem enthält, das mit einem Wärmetauscher (1) versehen ist, der in Form eines zylindrischen Hohlvolumens ausgebildet ist und einen Eingang (11) und einen Ausgang (12) besitzt, die mit einem Flüssigkeitskreis des Kühlsystems verbunden sind, dadurch gekennzeichnet, daß das zylindrische Hohlvolumen des Tauschers zwischen einem hohlen Rohrelement (2) des Chassis, dessen äußere Oberfläche auch die innere Oberfläche des Tauschers bildet und in dem Luft zirkulieren kann, und einem Tauscherkörper (10) in Form einer Hülse, die das hohle Rohrelement (2) umgibt und an diesem hermetisch angebracht ist, definiert ist, wobei das hohle Rohrelement (2) aus einem wärmeleitenden Werkstoff hergestellt ist.

2. Kraftfahrzeug nach Anspruch 1, dadurch gekennzeichnet, daß das hohle Rohrelement (2) aus einem Werkstoff auf Aluminiumbasis besteht.

3. Kraftfahrzeug nach Anspruch 1, dadurch gekennzeichnet, daß der Tauscherkörper (10) zwei Innenflächen (130) aufweist, die so beschaffen sind, daß sie jeweils zwei hohle, ringförmige Ausbauchungen (131, 132) aufweisen, die dazu bestimmt sind, zwei Ringdichtungen (13a, 13b) aufzunehmen, die die Dichtigkeit zwischen dem Tauscherkörper (10) und dem Rohrelement (2) sicherstellen.

4. Kraftfahrzeug nach Anspruch 3, dadurch gekennzeichnet, daß eine (132) der zwei hohlen, ringförmigen Ausbauchungen (131, 132) in einem verformbaren Teil (133) unter Druckwirkung hergestellt wird und nach der Positionierung des Tauscherkörpers (10) auf dem Rohrelement (2) ermöglicht, die Kompression der entsprechenden Ringdichtung (13b) auf der äußeren Oberfläche des Rohrelements (2) zu bewirken.

5. Kraftfahrzeug nach Anspruch 1, dadurch gekennzeichnet, daß der Tauscherkörper (10) zwei Innenflächen (140, 150) enthält, die so beschaffen sind, daß sie jeweils zwei hohle, ringförmige Ausbauchungen (141, 142, 151, 152) aufweisen, wovon eine (142, 152) dazu vorgesehen ist, eine Ringdichtung (13, 14) in einer ersten Anbringungsposition aufzunehmen, und wovon die zweite (141, 151) dazu vorgesehen ist, die Ringdichtung (13, 14) in einer zweiten Position, die die Dichtigkeit des Tauschers (1) sicherstellt, aufzunehmen.

6. Kraftfahrzeug nach einem der vorangehenden Ansprüche, dadurch gekennzeichnet, daß das Rohrelement (2) in Längsrichtung des Fahrzeugs angeordnet ist.

7. Kraftfahrzeug nach einem der vorangehenden Ansprüche, dadurch gekennzeichnet, daß der Tauscher (1) im Fahrzeug in der Weise angebracht ist, daß seine Längsachse zur Luftströmungsrichtung im Fahrzeug im wesentlichen parallel ist.

8. Kraftfahrzeug nach einem der vorangehenden Ansprüche, dadurch gekennzeichnet, daß der Tauscherkörper (10) aus Blech hergestellt ist und auf seiner äußeren zylindrischen Oberfläche ein Wellenprofil aufweist.

## Claims

1. Motor vehicle including a chassis and a liquid cooling system having a heat exchanger (1) produced to form a cylindrical cavity comprising an inlet (11) and an outlet (12) which are connected to a liquid circuit of said cooling system, characterized in that the cylindrical cavity of the exchanger is defined between a hollow tubular member (2) of the chassis, whose external surface also constitutes the internal surface of said exchanger and in which air can flow, and a sleeve-shaped exchanger body (10) encompassing and being hermetically mounted on the hollow tubular member (2), said member (2) being made of a heat conducting material.

2. Motor vehicle according to claim 1, characterized in that the tubular hollow member (2) is made of an aluminium based material.

3. Motor vehicle according to claim 1, characterized in that the exchanger body (10) has two internal edges (130) each formed so as to have two hollow annular embossings (131, 132) intended to receive two O-rings (13a, 13b) assuring the water tightness between said exchanger body (10) and said tubular member (2).

4. Motor vehicle according to claim 3, characterized in that one (132) of said two hollow annular embossings (131, 132) is realised in a part (133) of the internal edge which is capable of deflexion by the effect of a pressure, thus enabling the compression of the corresponding O-ring to be achieved (13b) on the external surface of said tubular member (2) following the positioning of said exchanger body (10) on said tubular member (2).

5. Motor vehicle according to claim 1, characterized in that the exchanger body (10) has two internal edges (140, 150) each formed so as to have two hollow annular embossings (141, 142, 151, 152), one (142, 152) of said two embossings being intended to receive an O-ring (13, 151) of said embossings being intended to receive said O-ring (13, 14) in a second position which assures the water tightness of said exchanger (1).

6. Motor vehicle according to any one of the preceding claims, characterized in that the hollow member (2) is disposed longitudinally with respect to the vehicle.

7. Motor vehicle according to any one of the preceding claims, characterized in that the exchanger (1) is mounted in the vehicle in such a way that its longitudinal axis is substantially parallel to the direction of the air flow in said vehicle.

8. Motor vehicle according to any one of the preceding claims, characterized in that the exchanger body (10) is made in sheet metal and has a corrugated profile on its external cylindrical surface.
